Europäisches Patentamt

European Patent Office

Office européen des brevets

(11) Publication number: **0 505 629 A1**

# EUROPEAN PATENT APPLICATION

(21) Application number: **91302655.5**

(22) Date of filing: **25.03.91**

(51) Int. Cl.5: **E02B  15/04**

(43) Date of publication of application:
**30.09.92 Bulletin  92/40**

(84) Designated Contracting States:
**DE ES FR GB IT NL**

(71) Applicant: **MARAVEN S.A.**
**Apartado 76343**
**Caracas 1070 A(VE)**

(72) Inventor: **Manzano, Graterol Rafael**

Ur Sanizacion Nuevo Seqovia, Recidencias
El Mirado
Paitamento 308, Berquisimeto(VE)
Inventor: **Chaviel, Anderson**
Sector Campo Elias, Calle Zamora No. 58
Cabimas, Zulia(VE)

(74) Representative: **Dixon, Donald Cossar et al**
**Gee & Co. Chancery House Chancery Lane**
**London WC2A 1OU(GB)**

(54) **Floating barriers for containing oil spills.**

(57) Floating barriers (I,II,III) for containing oil spills are described. The barrier is provided with containment means (6) which may be a skirted curtain of woven twisted nylon thread, double-coated with polyvinyl chloride, having low density polyurethane floats (2). Fixing means (7) secure the floats (2) to the curtain, and ballast (3) is attached to the submerged skirt of the curtain to maintain the curtain substanstially vertical when floating in water. Surprisingly improved properties, such as wear resistance and use versatility, even under extreme conditions, are achieved by the barriers.

FIGURE  1

This invention relates to floating barriers for containing oil spills.

Different types of barriers have been specifically adapted to particular applications. Nave-Boom barriers have a light structure, but they have only slight resistance to longitudinal stress and to the corrosive action of water. Oil-Fence barriers, given their thick weave, are substantially resistant to the corrosive action of water (tested in Maracaibo Lake) and to stress by wind, waves, currents and solid waste. They have orientable floats, are reversible, and occupy little storage space since they are foldable, but they are unstable and unrecoverable. Globe-Boom barriers, also resistant to the corrosive action of water (tested in Maracaibo Lake) and to stress by wind, waves, currents and solid waste, and easy to store, are too heavy and, although easily connectable, they have a coupling that is not universal.

In accordance with U.S. Patent No. 4,543,012, barriers referred to therein possess a relief pocket for the pollutant, but they are effective only in still water. The barrier of U.S. Patent No. 4,300,857 is adjusted to the seabed, thus retaining the water, but it is rigid and can be used only in still and not too deep waters.

*Summary of the Invention*

With regard to existing barriers in the market, Barriers I, II, and III solve several of the most critical problems faced in this technology. Because of the weave of twisted nylon thread, the containment means provides higher resistance to longitudinal stresses, which means higher versatility in its application. By providing fixing means basically made out of aluminum, stability is increased, on the one hand, to face the environment's corrosive action and, on the other hand, with regard to the pressure exerted by current against the barrier. With lower rigidity in structure, it is thus possible to control oil spills efficiently.

The barriers have a number of distinct aspects which, individually and in different combinations, contribute substantially to the subject invention.

a) their essential components are containment means, floating means, fixing means and ballast means,

b) the containment means (when floated in water) consist of a screen or curtain having an above-water zone (freeboard) and a submerged zone (skirt or flap),

c) the floating means keep the containment means afloat when the latter is placed in water,

d) the fixing means secure the floating means to the screen or curtain and impart stability to the containment means,

e) the ballast means maintain the screen or curtain substantially vertically disposed when the containment means is floated in water,

f) the screen or curtain is of woven twisted nylon thread,

g) the screen or curtain is coated on both sides with water-resistant polymer,

h) the water-resistant polymer is PVC,

i) the floating means have a density of from 70 to 170 g/l,

j) the fixing means comprise aluminum straps,

k) the ballast means comprise a ballast chain secured to the skirt or flap, and

l) steel wire rope tensioning means are provided along and secured to the freeboard.

*Brief Description of Figures*

Figure 1 is a perspective view of Barrier I.
Figure 2 is a perspective view of Barrier II.
Figure 3 is a perspective view of Barrier III.
Figures 4, 5 and 6 are transverse sections of float supports of Barriers I, II and III, respectively.
Figure 7 is a side and front view of the support for the ballast chain.
Figure 8 is a front view of the coupling for Barriers I and II.

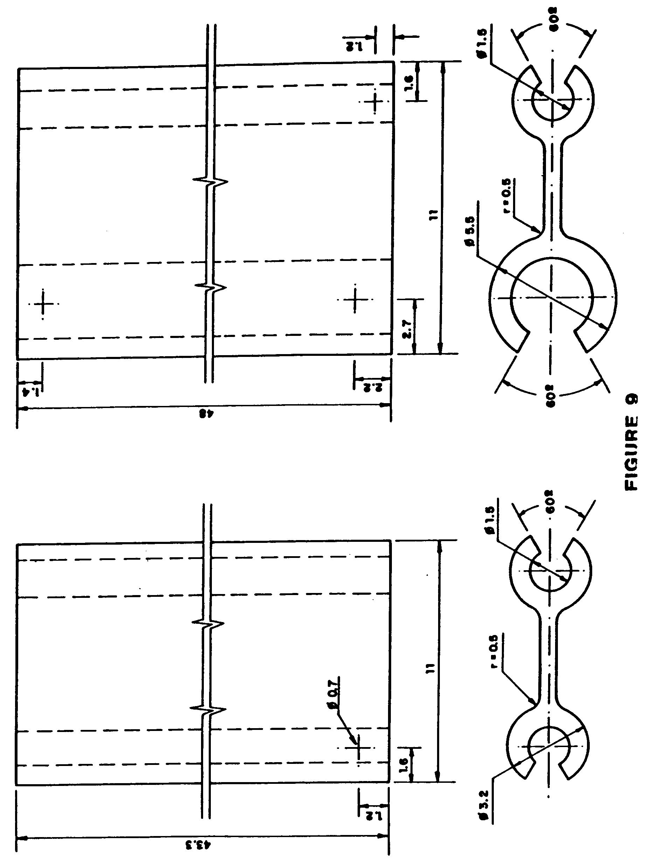

Figure 9 is a front view of the coupling for Barrier III.

*Details*

**Tensioning Means**

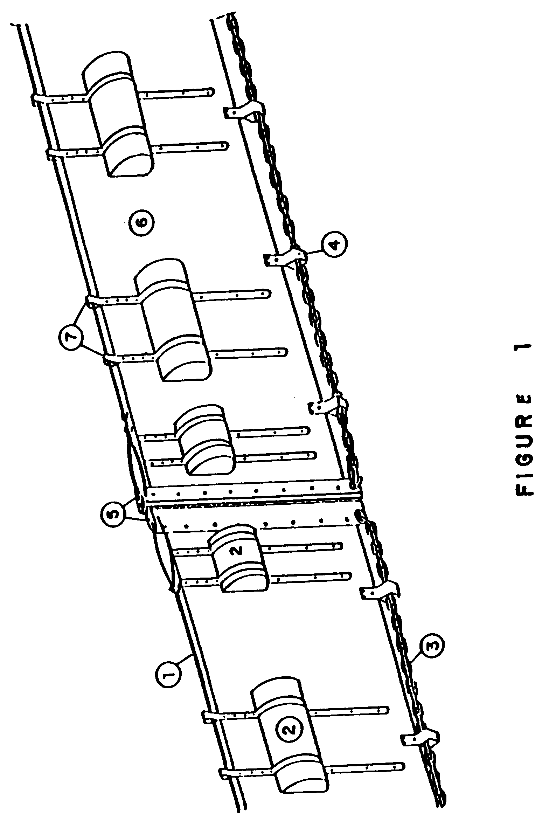

The tensioning means (1) of Barrier I is located in the upper part of said barrier (Fig. 1). It consists, e.g., of a steel wire rope that has been twisted from four to seven times with from 15 to 56 threads, thus obtaining a thickness of from 0.45 to 2.0 cm.

A preferred tensor element wire rope is one of 7 turns and 19 threads (e.g. NSR, 7 x 19) with a diameter between the values of 3/16 inch and 1/4 inch (0.476 cm and 0.635 cm). This kind of wire rope combines flexibility with fatigue resistance and corrossion resistance ("Handbook or Ocean and Underwater Engineering", by J.J. Meyers, C.H. Holm and R.F. McAllister). Alternative tensioning means with similar properties are known and available. The wire rope is coated with a rubber hose, not shown in the figure, to avoid wear of the support plate (7) (Fig. 1). Barrier II does not have tensioning means (1) since it includes a thicker ballast chain that allows it to absorb longitudinal stresses. Barrier III has a ballast chain that is able to exert a double function as a stabilizing and a tensioning means (given its size), and its use is recommended in places where water currents are not too strong.

**Floating Means**

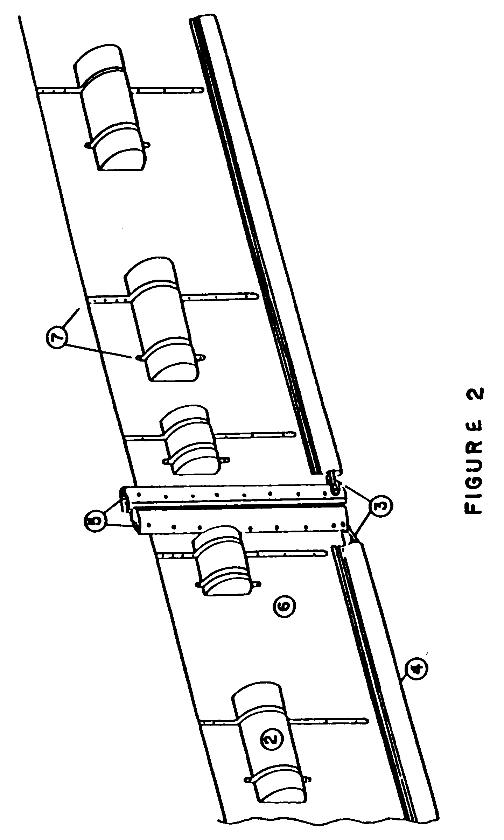

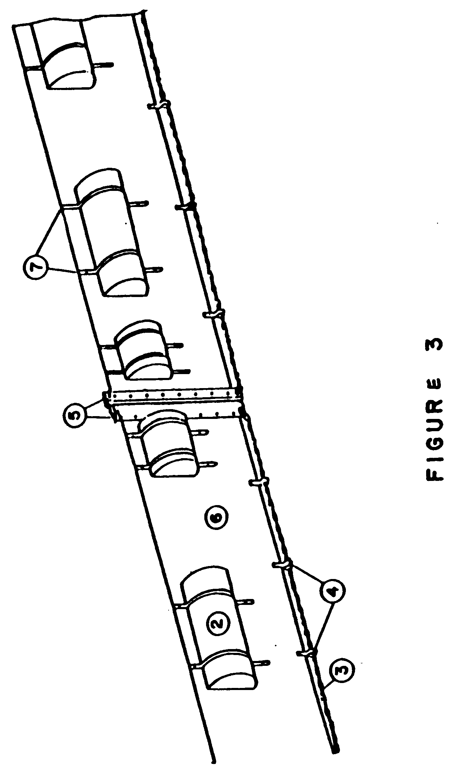

The floating means (2) (Figs. 1, 2 and 3) are identical for the three barriers and consist of cylindrical devices, having, e.g., a diameter between 20 and 22 cm and a length from 49 to 51 cm, spaced about each 35 to 45 cm and preferably throughout the barrier. Said arrangement, together with the float size, eliminates the relative rigidity that creates fragility when known barriers receive an impact.

The devices are preferably made from rigid aromatic polyether polymer (e.g. SINTHEMAD-90) with a model density in the range of from 130 g/l to 170 g/l conferring resistance/bouyancy characteristics. The water absorption of such polymer is low, since it has a high percentage of closed cells and a compact surface skin that strongly resists water absorption.

Said cylinders consist of two symmetrical convex covers fixed to the barrier's skirt (6) (Figs. 1, 2 and 3) by means of a pair of aluminum straps. The cylinders are made out of a polyurethane having a molded density between 70 and 90 kg/m$^3$, which gives them a buoyancy that is from four to five times the barrier's weight. With this excellent flotation capability, said material also increases their useful life and durability since they undergo wear "by layers" and not by breaking or cracking when faced with saltpeter, sunlight, meteorological conditions, etc.

Floats are preferably made of a low density polyurethane (e.g. that manufactured by the MONOMEROS COLOMBO-VENEZOLANOS industry). Said polyurethane has the following advantages with regard to polyurethane of commercial barriers: first, its molecular structure avoids easy water "soaking" and is responsible for floats wearing "by layers" with no channel formation, which greatly reduces float cracking probabilities; second, it features better fire-resistance.

**Containment Means**

This consists of a screen or a curtain (6) (Figs. 1, 2 and 3) which maintains a zone above the water surface, that is to say the freeboard, and a submerged zone called skirt or flap. Said curtain is approximately from 14 to 16 m long and from 0.75 to 0.85 m wide for Barriers I and II, and from 14 to 16 m long and from 0.35 to 0.45 m wide for Barrier III.

The length of each barrier section is about 15m for each of the three types (models). With the indicated materials, the dimensions that succeed best in joining flexiblity and stability are found in a length range of from 14 to 15 m per barrier section. The width of barriers I and II is preferably in the range of from 0.70 m to 1.00 m and that for barrier III if from 0.35m to 0.45 m.

The weave said flap is made out of consists of a twisted nylon thread. The nylon (preferably Nylon-6) is reinforced with from 5 to 10% fiberglass and an ultraviolet-ray-resistant additive (TINUVIN™). The thread is twisted to increase its resistance. Then, warping and winding of the twisted thread takes place, and the required weave is conventionally manufactured in a loom. Immediately thereafter, scouring of the weave is performed. A plastisol is prepared, as well-known in the art, from a polyvinyl chloride (e.g. PVC-360) to coat the weave on both sides. Said polyvinyl chloride (PVC) coating is made in two rolling furnaces, both at a temperature of about 170°C.

PVC-360 polymer has the following characteristics:

**K Value**                                   **80 + 2**

**Immediate Brooksfield**               **(min.)**        **(max.)**

| Viscosity | 3,000 – 10,000 cps |
| --- | --- |
| Brooksfield viscosity after 24 hours | 10,000 – 30,000 cps |
| Moisture | 0.15% |
| Apparent Density | 0.25 – 0.32 gr/mm$^3$ |

In the case of Barrier II, the weave is double-coated on each side, thus increasing thickness and, consequently, rigidity. The object of this variant with regard to the other two types is that it is intended for permanent use in sites with strong current and wave action.

Traction tests were conducted on weave samples from said flap having dimensions of about 2.5 cm wide and 1 to 1.5 mm thick. The following breaking stress values were obtained: 507 Kg/cm$^2$ for Barriers I and III, and 737 Kg/cm$^2$ for Barrier II, the weave high stress-resistance being thus demonstrated.

A traction test carried out on the threads of Barriers I, II and III yielded the following results:

Threads of Barriers I and II

For 0.45 cm wide strips per 0.1 cm thick:

Average breaking load, 200 lb. (91 Kg)

Average breaking stress, 7,200 lb/sq.inch. (506 Kg/cm$^2$)

For 0.54 cm x 0.15 cm strips

Average breaking load, 515 lbs. (234 Kg)

Average breaking stress, 10,400 lbs/sq. inch. (731 Kg/cm$^2$)

**Fixing and Support Means**

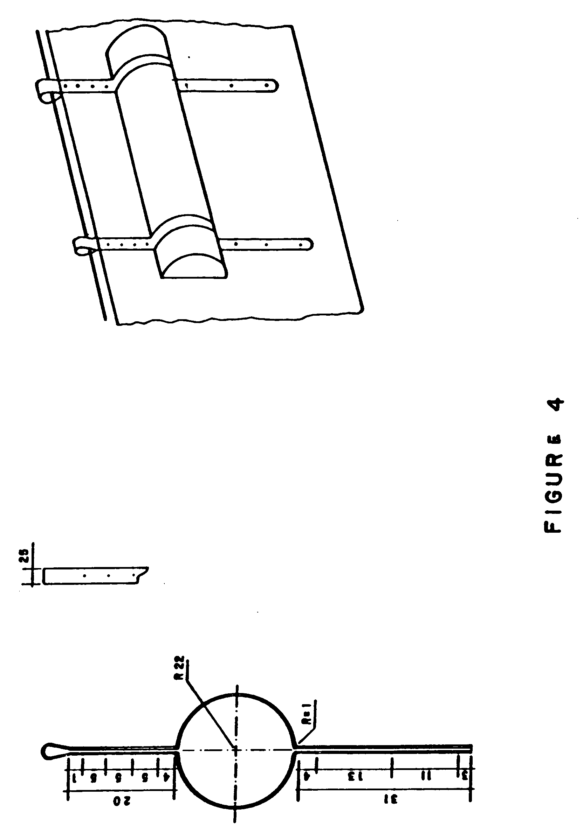

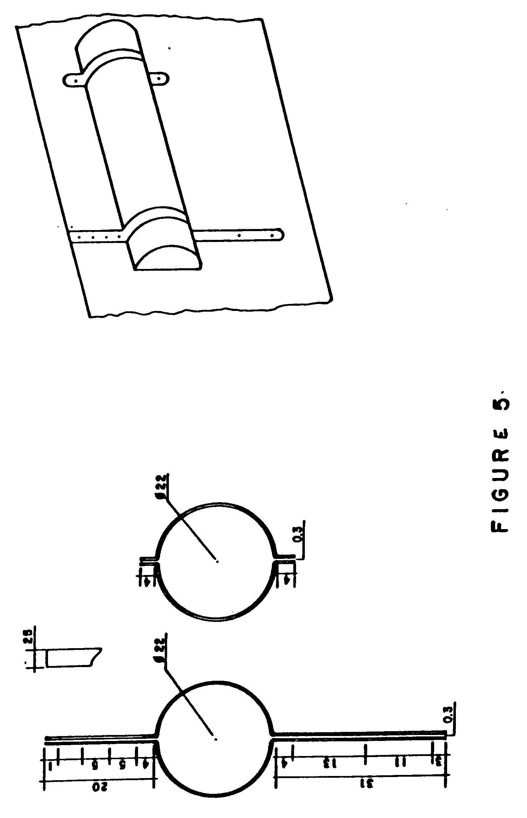

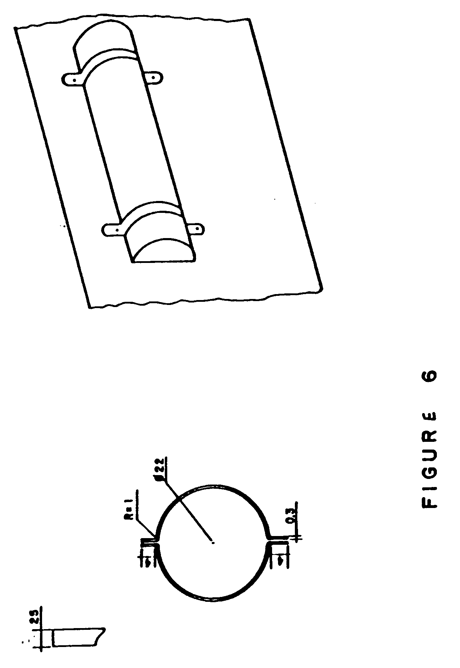

A couple of aluminum plates (7) (Figs. 1 to 6) are provided as fixing or support means for the floats. Said plates are riveted to the skirt body. In the case of Barrier I, the plates extend over the freeboard, as a horseshoe, which permits lining up the tensioning means with the containment means.

In the case of Barriers I and II, said plates increase stability since they maintain the containment means vertically.

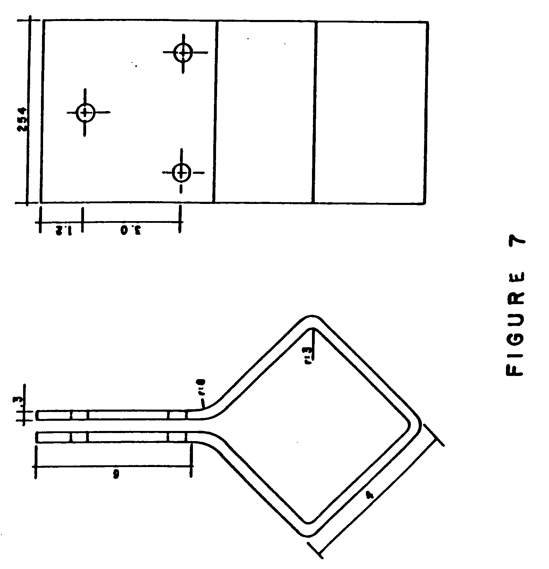

Square aluminum rings riveted to the skirt work as support means (4) (Figs. 1, 3 and 7) and are used to line up the ballast chain (3) all along the barrier. In Barrier II, they have been replaced by a cover or a pocket (8) made out of the same material as the skirt and hermetically sewn to it also with nylon, covering the chain longitudinally. The variant's intention is to distribute the chain's weight uniformly all along the skirt's length, since the latter is thicker and, therefore, heavier than the other two models (I and III).

**Ballast Means**

The ballast means consists of a galvanized steel chain (3) (Figs. 1 to 3) from 14 to 15 m (preferably 14.5 m) long and from 0.82 to 0.88 cm thick in models I and III, and a similar length and from 1.24 to 1.30 cm thick in Barrier II.

Such means function as an additional tensioning means in order to support longitudinal stresses better.

**Connecting Means**

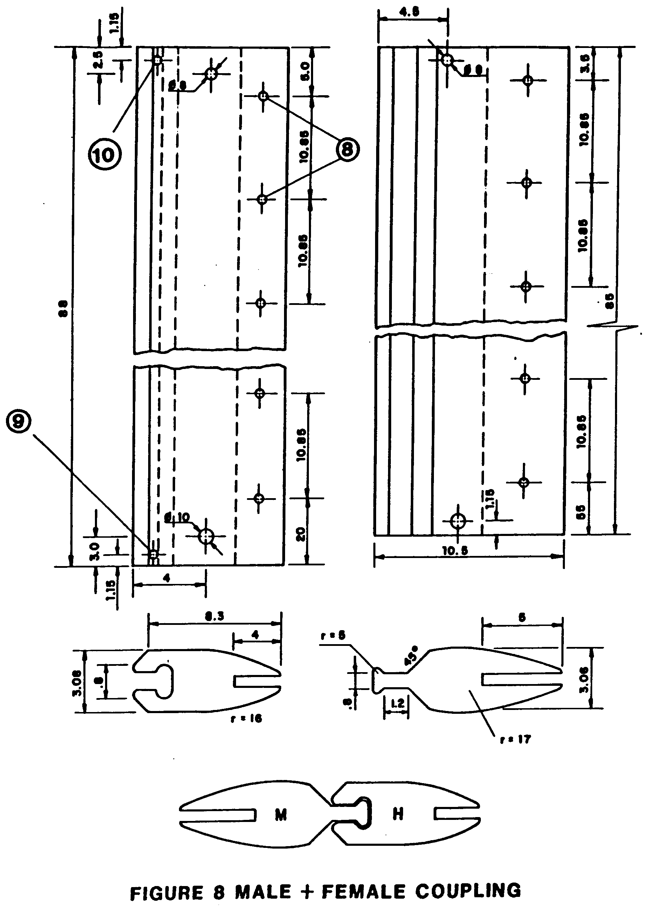

These consist of male-female couplings (5) (Figs. 1, 2 and 3) that link the barrier sections or portions. Said couplings are aluminum (e.g. A3334 series, manufactured by the Venezuelan industry ALCANVEN) planar bars that have grooves and holes on the end opposed to the connection serving as the flap's clamping area. The male-female coupling means are universally known. Couplings used in the present invention are displayed in two different designs, both showing the same efficiency. Figure 8 shows coupling means useful in Barriers I, II and III. This figure shows holes made in the aluminum bar: a) to clamp the cloth (holes 8 of approximately 7 mm in diameter), b) to clamp the ballast chain (holes 9 of approximately 7 mm in diameter), and c) to clamp the tensioning wire (holes 10 of approximately 7 mm in diameter).

The cloth width (or flap) is trapped in said coupling's longitudinal groove and additionally fixed with bolts that go through a fold made in that very end of the cloth, a plate that also has grooves and that has been wrapped in said fold, and the coupling itself.

*Specific Aspects of Each Type of Barrier*

Barrier I is appropriate for bays and ports and/or wherever a long stay is not required. It has been designed for a rapid deployment from a medium-size craft. The combined effort of the tensioning wire rope and the ballast chain make it particularly resistant to longitudinal stresses.

This barrier can be vertically thrown into the water at a place of interest, and deployed according to any of U, V, J or O configurations, allowing for effective containment due to the flexibility of the weave it is made of. It can be handled from medium-size crafts. Also, it is possible to achieve rapid deployment with a maximum of four men by holding the barrier by its tensioning means, which can be readily done due to its light weight. When used offshore, sections are previously coupled to two crafts, and stored in a zig-zag arrangement in order to save storage space, while avoiding overlapping floats. Both the freeboard (approximately 35 cm) and flap (approximately 45 cm) dimensions account for an ideal relationship that allows a combination of stability and containment capability resulting in higher barrier efficiency.

Barrier II is adequate for places with winds up to 70 Km/h and currents up to 1.5 knots (2.8 Km/h). It can keep operating for more than a year. The weave's thickness guarantees optimum penetration in water and increased capacity in containing crude oil.

This barrier is similar to model I barriers with respect to deployment. As it is heavier, up to six men are required for handling it. Since it is not provided with any tensioning means on the upper part, it must be held by the flap itself to be thrown into the water, with no risk of tearing because the weave in this model is thick enough so as to stand such stress.

Barrier III is suitable for spills requiring easy handling and occupation of a reduced area.

Only two men are required for deployment for it is lighter and smaller than Barriers I and II. It proves particularly useful as a deviation barrier.

The male-female coupling means in the three models of barriers has an approximate weight of 8 Kg regardless of the design, and it is heavier than coupling means in barriers already known. In this way, barrier stability is increased.

The invention and its advantages are readily understood and appreciated from the foregoing description. Various changes may be made in individual components without departing from the spirt and scope of the invention or sacrificing its material advantages. The described barriers are merely illustrative of preferred embodiments of the invention.

## Claims

1. A floating barrier for containing oil spills and consisting essentially of:
   a) containment means,
   b) floating means,
   c) fixing means,and
   d) ballast means;
   the containment means, when floated in water, having an upper edge and a lower edge, and comprising an above-water zone or freeboard and a submerged zone or skirt or flap;
   the floating means being remote from the upper edge and from the lower edge of the containment means and comprising means to keep the containment means afloat when said containment means is placed in water;
   the fixing means comprising a plurality of integral and unitary means to secure the floating means to the screen or curtain and concurrently to impart stability to the containment means; said fixing means extending toward, but terminating at a position remote from, the lower edge of the containment means; and
   the ballast means comprising means attached to the skirt or flap for maintaining the screen or curtain substantially vertically disposed when the containment means are floating in water.

2. A floating barrier according to claim 1, wherein said containment means consists of a screen or curtain of woven twisted nylon thread coated on both sides with water-resistant polymer.

3. A floating barrier according to claim 2, wherein the water-resistant polymer of the coating on the screen or curtain is PVC, the floating means are substantially regularly spaced along the containment means

EP 0 505 629 A1

and are composed of material having a density of from 70 to 170 g/l, and the fixing means comprise aluminum straps.

4. A floating barrier according to claim 3, wherein the floating means comprises polyurethane having a density of from 70 to 90 g/l.

5. A floating barrier according to any preceding claim, wherein the ballast means comprise a ballast chain supported by aluminum rings secured to the skirt or flap.

6. A floating barrier according to any of claims 1 to 4, wherein the ballast means comprise a ballast chain supported by a nylon sleeve or pocket which covers the chain and is secured to the skirt or flap.

7. A floating barrier according to claim 6, wherein the sleeve or pocket is of woven twisted nylon thread and is sewn along its entire length to the containment means.

8. A floating barrier according to any of claims 1 to 4, having a steel wire rope tensioning means longitudinally disposed along and adjacent to the upper edge of and secured to the containment means.

9. A floating barrier according to claim 2, wherein the screen or curtain is coated on each face with one or two layers of polyvinyl chloride (PVC).

10. A floating barrier according to claim 2, wherein the containment means is of interwoven twisted thread and the polymer with which it is coated is polyvinyl chloride (PVC) polymer; the floating means comprises two substantially semicircular halves of solid polyurethane cylinders symmetrically disposed on opposite sides of the containment means; the fixing means comprises metallic plates or straps for supporting the floating means and for securing tensioning means to the freeboard; the ballast means comprises a chain secured to, adjacent and substantially commensurate in length with the skirt or flap; and tensioning means comprises a) the ballast means and b) wire rope secured to the freeboard by the fixing means.

11. A plurality of floating barriers, each of which is a floating barrier according to any preceding claim, and each of which is connected to one or two adjacent barriers by coupling means.

12. A floating barrier for containing oil spills, in combination with tensioning means, the floating barrier consisting essentially of:
    a) containment means,
    b) floating means,
    c) fixing means, and
    d) ballast means;
    the containment means, when floated in water, having two-side edges, an upper edge and a lower edge and comprising an above-water zone or freeboard and a submerged zone or skirt or flap; said containment means consisting of a screen or curtain;
    each of the floating means comprising two halves of solid cylinders symmetrically placed on opposite sides of the containment means and having an axis parallel to the upper edge of the containment means; said floating means being remote from both the upper edge and the lower edge of said containment means;
    the fixing means comprising plates which secure said floating means to said containment means and extend normal to the axis of the floating means in one direction over the upper edge of the containment means and in the opposite direction only part way toward the lower edge of said containment means;
    the ballast means comprising means attached to the skirt or flap for maintaining the screen or curtain substantially vertically disposed when the containment means is floating in water; and
    the tensioning means being secured to the barrier by portions of the fixing means plates which extend over the upper edge of the containment means.

13. A floating barrier according to claim 12, wherein the tensioning means comprise wire rope longitudinally disposed along and adjacent to the upper edge of the containment means.

6

**14.** A floating barrier according to claim 12 or claim 13, wherein the fixing means plates are aluminum plates.

**15.** A floating barrier according to any of claims 12 to 14, wherein the ballast means comprises a ballast chain supported by the skirt or flap and extending substantially coextensively along the length of said skirt or flap.

**16.** A floating barrier according to any of claims 12 to 15, having a planar bar secured along one or each side edge with substantially coextensive means to couple the floating barrier to another similar floating barrier having complementary coupling means substantially coextensive with its corresponding planar bar.

**17.** A plurality of floating barriers, each of which is connected to one or two adjacent barriers by coupling means, each of which barriers is a floating barrier according to any of claims 12 to 16, and wherein the coupling means comprises male-female coupling means.

**18.** A floating barrier according to any of claims 12 to 17, wherein the containment means consists of a screen or curtain of woven twisted nylon thread coated on both sides with water-resistant polymer.

**19.** A barrier for containing oil spills ,comprising:
    a) containment means,
    b) floating means,
    c) fixing means,
    d) connecting means,
    e) ballast means, and
    f) tensioning means;
    the containment means, when floated in water, having an upper edge, a lower edge, a longitudinal axis midway between the upper and lower edges, and two side edges, and comprising an above-water zone or freeboard and a submerged zone or skirt or flap; said containment means consisting of a coated screen or curtain of interwoven and twisted thread, the screen or curtain being coated on both sides with water-resistant polyvinyl chloride polymer;
    each of the floating means being in the form of two halves of a solid cylinder placed symmetrically on opposite sides of the screen or curtain, each solid cylinder being made of superposed layers of polyurethane, having an upper edge and a lower edge and being positioned so that its lower edge substantially coincides with the longitudinal axis of said containment means;
    the fixing means comprising aluminum plates which secure said floating means to the containment means, which extend upwardly from the floating means and form a passage for wire rope beyond the upper edge of the containment means and which extend downwardly from the floating means to a position remote from the lower edge of said containment means;
    the connecting means comprising male-female couplings substantially coextensive with and along the side edges of adjacent containment means;
    the ballast means being a chain secured to and substantially coextensive with the lower edge of said containment means; and
    the tensioning means comprising wire rope extending through the passage provided by the fixing means along and substantially coextensive with the upper edge of the containment means in combination with the ballast means.

EP 0 505 629 A1

FIGURE 1

FIGURE 2

FIGURE 3

FIGURE 4

FIGURE 5.

FIGURE 6

EP 0 505 629 A1

FIGURE 7

14

FIGURE 8 MALE + FEMALE COUPLING

FIGURE 9

European Patent Office

**EUROPEAN SEARCH REPORT**

Application Number

EP    91 30 2655

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 545 517 (HOOGOVENS GROEP) <br> * page 4, line 1 - page 5, line 9; figures * | 1,8,11 | E02B15/04 |
| Y | | 2-7,9, 10,12-17 | |
| A | | 19 | |
| | --- | | |
| Y | US-A-3 852 978 (R. FOSSBERG) <br><br> * column 3, line 14 - line 17 * <br> * column 4, line 33 - line 36 * <br> * column 5, line 3 - line 22; figure 1 * | 2-5,9, 10,12-15 | |
| A | | 18,19 | |
| | --- | | |
| Y | EP-A-0 033 238 (I. ASHWORTH) <br> * page 5, line 32 - page 6, line 8; figure 1 * | 6,7 | |
| | --- | | |
| Y | US-A-3 973 406 (G. CASEY) <br> * column 7, line 63 - column 8, line 15; figure 10 * | 16,17 | |
| A | | 19 | |
| | --- | | TECHNICAL FIELDS SEARCHED (Int. Cl.5) |
| A | US-A-3 859 796 (R. BENSON) <br> * column 5, line 19 - line 25; figure 14 * | 4,13 | |
| | ----- | | E02B |

The present search report has been drawn up for all claims

| Place of search | Date of completion of the search | Examiner |
|---|---|---|
| THE HAGUE | 13 NOVEMBER 1991 | KRIEKOUKIS S. |

EPO FORM 1503 03.82 (P0401)